# EUROPÄISCHE PATENTANMELDUNG

(11) **EP 0 904 716 A2**
(43) Veröffentlichungstag der Anmeldung: **31.03.1999**
(21) Anmeldenummer: 98810907.0
(22) Anmeldetag: 11.09.1998
(51) Int. Cl.: A47J 27/09

(54) **Sicherheitsventil für einen Dampfdruckkochtopf**

(30) Priorität: 22.09.1997 CH 2220/97
(71) Anmelder: Heinrich Kuhn Metallwarenfabrik Aktiengesellschaft, 8486 Rikon im Tösstal (CH)
(72) Erfinder: Hüppi, Marcel, 9524 Zuzwil (CH)
(74) Vertreter: Groner, Manfred

(57) **Zusammenfassung**

Das Sicherheitsventil ist mit einem in einem Ventilgehäuse (1) axial verschiebbar gelagerten und unter der Wirkung einer Feder (8) stehenden Druckstift (12) versehen, der gegen die rückwirkende Kraft der Feder (8) in eine Entlüftungsposition anhebbar ist. In der Entlüftungsposition gibt der Druckstift (12) im Ventilgehäuse (3) einen oder mehrere Durchgänge (7) frei, durch die Dampf aus dem Innern (24) des Dampfdruckkochtopfs (20) nach aussen entweichen kann. Es sind Mittel (9) vorgesehen, mit denen der Druckstift (12) zum Druckausgleich in der Entlüftungsposition gegen die rückwirkende Kraft der Feder (8) arretierbar ist. Vorzugsweise ist der Druckstift (12) in der Entlüftungsposition durch Verdrehen arretierbar. Das Sicherheitsventil ermöglicht ein einfaches, schonendes und kontrolliertes Entlüften des Dampfdruckkochtopfes.

## Beschreibung

Die Erfindung betrifft ein Sicherheitsventil für einen Dampfdruckkochtopf, mit einem in einem Ventilgehäuse axial verschiebbar gelagerten und unter der Wirkung einer Feder stehenden Druckstift, der gegen die rückwirkende Kraft der Feder in eine Entlüftungsposition anhebbar ist, wobei in der Entlüftungsposition der Druckstift im Ventilgehäuse einen oder mehrere Durchgänge freigibt, durch die Dampf aus dem Innern des Kochtopfes nach aussen entweichen kann.

Sicherheitsventile der genannten Art sind seit langem bekannt und haben sich in der Praxis an sich vielfach bewährt. Beispielsweise zeigt die EP-A-0 587 532 des Anmelder ein solches Sicherheitsventil. Bei einem Dampfdruckkochtopf mit einem solchen Sicherheitsventil lässt sich der im Kochtopf herrschende Überdruck nach Ablauf der Kochzeit sofort vermindern, indem der Druckstift an seinem vorragenden oberen Ende von Hand gefasst und gegen die rückwirkende Kraft der Feder weiter nach oben bewegt wird. In einer oberen Position, der sogenannten Entlüftungsposition, gibt der Druckstift radiale Bohrungen im Ventilgehäuse frei und durch diese Bohrungen kann nun Wasserdampf aus dem Innern des Kochtopfes nach aussen entweichen, bis ein Druckausgleich erreicht ist und der Deckel abgenommen werden kann. Durch dieses sogenannte "Abdampfen" lässt sich ein Kochvorgang unter Druck vergleichsweise schnell abbrechen, was bei den vielfach kurzen Kochzeiten für ein gutes Kochergebnis durchaus notwendig ist. Hierbei besteht jedoch die Gefahr, dass der Druck unkontrolliert zu schnell abfällt und empfindliches Kochgut, wie beispielsweise Gemüse, insbesondere Kartoffeln, durch den schnellen Druckabfall beschädigt wird. Auch kann der Druckstift durch den austretenden Dampf so heiss werden, dass das Abdampfen mehrfach unterbrochen werden muss. Bei unsachgemässer Handhabung können durch austretenden Dampf Verbrennungen an der Hand entstehen. Von vielen Köchinnen und Köchen wird deshalb das an sich in vielen Fällen vorteilhafte Abdampfen vermieden.

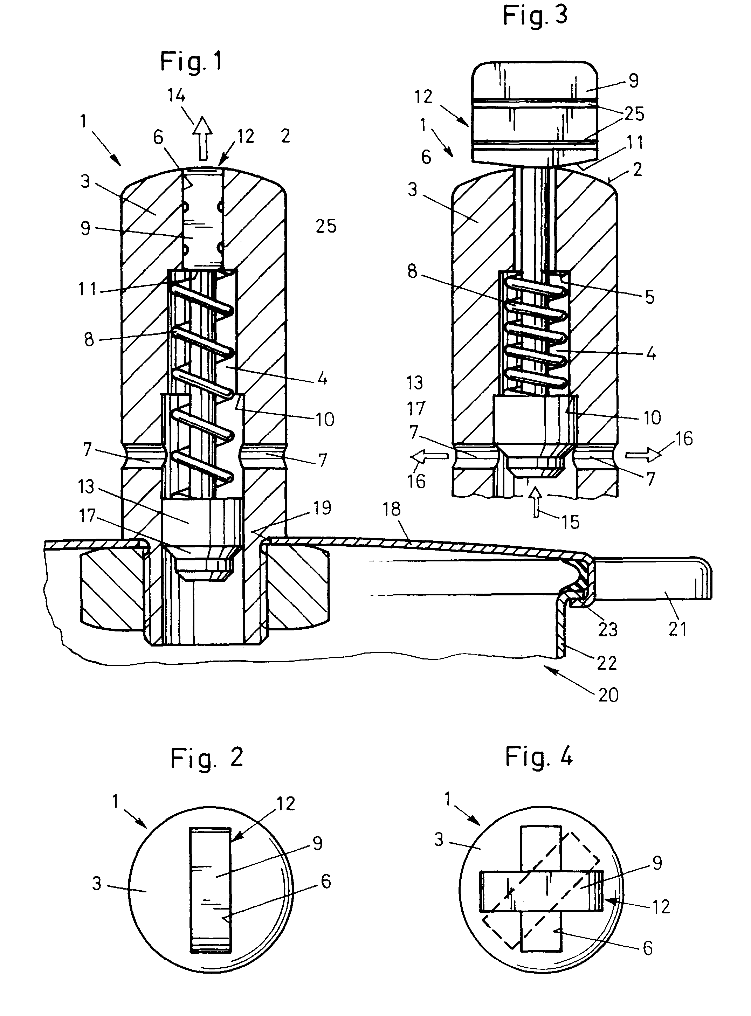

Durch die DE-295 11 453 U1 ist eine Druckentlastungseinheit bekannt geworden, die einen in einer Öffnung des Deckels eines Dampfdruckgefässes gelagerten Ventilkörper aufweist. Der Ventilkörper weist in der Öffnung seitliches Spiel auf und kann zum Abdampfen mittels eines Schiebers gekippt werden (Fig. 3). Der Dampf entweicht, solange mit dem Schieber der Ventilkörper in der gekippten Lage gehalten wird.

Die EP-0 281 646 B1 offenbart ein Dampfdruckkochgefäss, das im Deckel einen Ventilkörper aufweist, der bei geschlossenem Gefäss unter Federdruck eine Öffnung im Deckel abdichtet. Zum Abdampfen wird die Feder durch Zurückziehen eines Schiebeknopfes vollständig entspannt und eine Klappe soweit angehoben, bis ein Dichtungsteil bei entspannter Feder im Abstand zum Ventilsitz gehalten ist.

Der Erfindung liegt die Aufgabe zugrunde, ein Sicherheitsventil der genannten Art zu schaffen, mit dem ein Entlüften des Dampfdruckkochtopfes einfacher, kontrollierter und schonender durchführbar ist. Die Aufgabe ist bei einem gattungsgemässen Sicherheitsventil dadurch gelöst, dass Mittel vorgesehen sind, mit denen der Druckstift zum Druckausgleich in die Entlüftungsposition gegen die rückwirkende Kraft der Feder arretierbar ist. Bei einem erfindungsgemässen Sicherheitsventil wird der Druckstift von Hand in die Entlüftungsposition angehoben und danach arretiert.

Nach dem Arretieren muss der Druckstift nicht mehr von Hand gehalten werden. Beim Entlüften wird dadurch eine Berührung mit dem austretenden Dampf vermieden und während dieser Zeit kann anderweitig weitergearbeitet werden. Durch eine entsprechende Wahl der Entlüftungsposition des Druckstiftes kann erreicht werden, dass die Abdampfgeschwindigkeit eingestellt werden kann. Insbesondere kann erreicht werden, dass der Druckabfall so langsam erfolgt, dass eine Beschädigung des Kochgutes nicht zu erwarten ist. Durch das Arretieren des Druckstiftes ist sodann gewährleistet, dass der Druckabfall stetig erfolgt.

Das Arretieren des Druckstiftes ist dann besonders einfach und sicher möglich, wenn nach einer Weiterbildung der Erfindung der Druckstift in der Entlüftungsposition durch Verdrehen arretierbar ist. Zum Entlüften wird der Ventilstift in die Entlüftungsposition angehoben und beispielsweise um 90° verdreht. Dies ermöglicht eine sehr einfache und leicht erlernbare Handhabung. Konstruktiv lässt sich das Sicherheitsventil dann besonders kostengünstig realisieren, wenn der Druckstift nach einer Weiterbildung der Erfindung an seinem oberen Ende einen Kopf aufweist, der unrund ist und in einer Drehstellung mit einer Fläche am Gehäuse des Sicherheitsventils oder an einem Gehäuseaufsatz anlegbar ist.

Nach einer Weiterbildung der Erfindung sind die Mittel zum Arretieren des Druckstiftes so ausgebildet, dass die Position des Druckstiftes in der arretierten Position stetig höhenverstellbar ist. Vorzugsweise erfolgt dies durch eine Steuerfläche, beispielsweise durch eine geneigte oder ansteigende Fläche am Ventilgehäuse oder einem Gehäuseaufsatz.

Ein Gehäuseaufsatz hat den wesentlichen Vorteil, dass am bisherigen Sicherheitsventil keine oder nur geringfügige Änderungen erforderlich sind. Der Gehäuseaufsatz ist vorzugsweise so ausgebildet, dass er losbar auf das Ventilgehäuse aufsetzbar ist.

Vorzugsweise ist der Gehäuseaufsatz aus Metall oder einem geeigneten Kunststoff hergestellt.

Weitere vorteilhafte Merkmale ergeben sich aus den abhängigen Patentansprüchen, der nachfolgenden Beschreibung sowie der Zeichnung. Es zeigen:
Figur 1 einen Schnitt durch ein erfindungsgemässes Sicherheitsventil und einen Teil eines Kochtopfes,
Figur 2 eine Draufsicht auf das Sicherheitsventil gemäss Figur 1,
Figur 3 das Sicherheitsventil gemäss Figur 1, jedoch mit dem Druckstift in der Entlüftungsposition,
Figur 4 eine Draufsicht auf das Sicherheitsventil gemäss Figur 3,
Figuren 5 und 6 schematisch das Arretieren des Druckstiftes, und
Figur 7 einen Schnitt durch eine Variante des erfindungsgemässen Sicherheitsventils.

Das in Figur 1 gezeigte Sicherheitsventil 1 ist in üblicher Weise in einer Öffnung 19 eines Deckels 18 lösbar befestigt. Der Deckel 18 ist mit einem Handgriff 21 versehen und mit einem Bajonettverschluss 23 über einen Dichtring luftdicht und lösbar mit einem Behälter 22 verbindbar. Der Behälter 22 mit dem aufgesetzten Deckel 18 und dem Sicherheitsventil 1 bilden einen Dampfdruckkochtopf 20, der einen Innenraum 24 für das Kochgut aufweist. Beim Beheizen des Dampfdruckkochtopfes 20 auf einer hier nicht gezeigten Kochstelle wird im Innenraum 24 bei geschlossenem Sicherheitsventil 1 ein Überdruck aufgebaut. Hierbei steigt ein in einem Ventilgehäuse 3 begrenzt verschiebbar gelagerter Druckstift 12 in Richtung des Pfeils 14 an. Gegen diese Bewegung des Druckstiftes 12 wirkt eine Spiralfeder 8, die koaxial zum Druckstift 12 in einer durchgehenden Bohrung 4 des Gehäuses 3 angeordnet ist. An ihrem oberen Ende liegt die Spiralfeder 8 an einer Schulter 5 des Ventilgehäuses 3 und an ihrem unteren Ende an einem Verschlusskörper 13 des Druckstiftes 12 an. In der in Figur 1 gezeigten Position verschliesst der Druckstift 12 mit dem Ventilkörper 13 die Bohrung 4. Die Spiralfeder 8 ist in dieser Position entspannt.

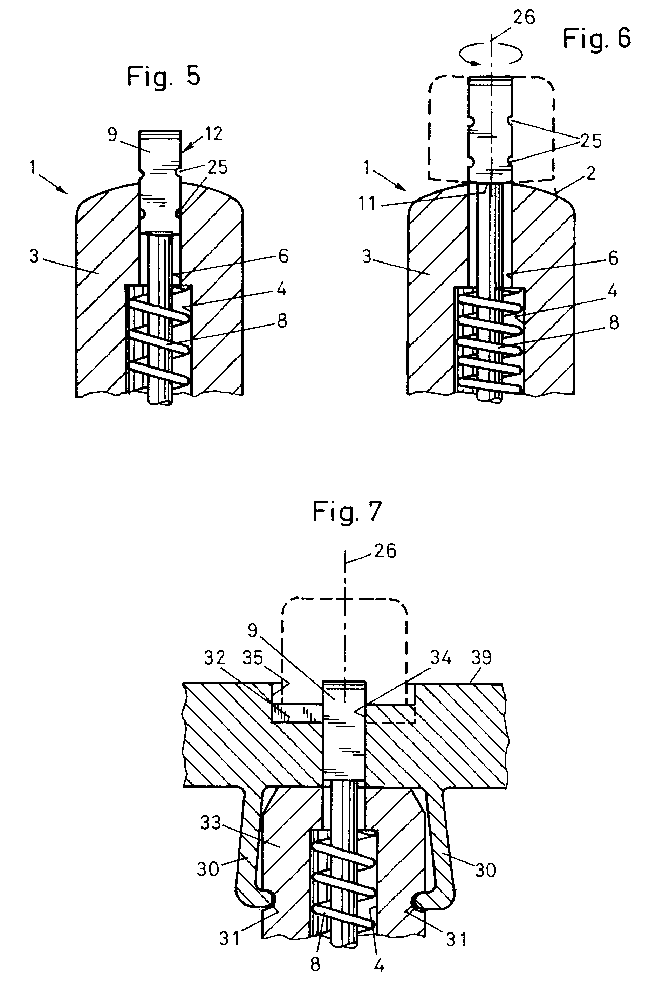

Bei einem Überdruck im Innenraum 24 wird entsprechend der Druckstift 12 gegen die rückwirkende Kraft der Feder 8 angehoben. Mit einer Markierung 25 an einem Kopf 9 des Druckstiftes 12 kann der Kochbetriebsdruck angezeigt werden. Die visuelle sichtbare Markierung 25 erlaubt eine Regelung der Energiezufuhr zum Dampfdruckkochtopf 20. Die Figur 5 zeigt die Position des Kopfes 9 während eines Kochvorganges auf dem höheren der beiden angegebenen Kochbetriebsdrücke. Wird nach Beendigung des Kochvorganges die Energiezufuhr zum Dampfdruckkochtopf 20 unterbrochen, so bewegt sich der Druckstift 12 allmählich wieder in die in Figur 1 gezeigte Position. Dieser Vorgang dauert ohne aktive Abkühlung des Gefässes 22 vergleichsweise lange. Um den Druckausgleich im Innenraum 24 zu beschleunigen, erlaubt das Sicherheitsventil 1 ein halbautomatisches Entlüften oder "Abdampfen" des Dampfdruckkochtopfes 20. Dies wird nachfolgend erläutert.

Zum Entlüften des unter Druck stehenden Dampfdruckkochtopfes 20 wird der Druckstift 12 aus der in Figur 5 gezeigten Stellung in die in Figur 6 gezeigte Stellung angehoben. Dazu wird der vorstehende Kopf 9 von Hand gefasst und gegen die rückwirkende Kraft der Feder 8 nach oben gezogen. Der Kopf 9 ist im Querschnitt gesehen unrund, beispielsweise rechteckig gemäss Figur 2. Befindet sich der Druckstift in der in Figur 6 gezeigten Position, so wird er am Kopf 9 um seine Längsachse 26 in die gestrichelt gezeigte Position gedreht. Der Kopf 9 überragt nun die Bohrung 4 seitlich und liegt nach dem Loslassen mit seiner Unterseite 11 auf der Oberseite 2 des Gehäuses 3 auf. Der Druckstift 12 ist damit gegen eine Rückbewegung arretiert. In dieser Position befindet sich gemäss Figur 3 der Verschlussteil in einer Position, in welcher seitliche Bohrungen 7 des Ventilgehäuses durchgängig sind. Aus dem Innenraum 24 kann deshalb in Richtung der Pfeile 15 und 16 Dampf in die Umgebungsatmosphäre ausströmen. Der freigegebene Strömungsquerschnitt ist bestimmt durch die Position einer konischen Andrehung 17 des Verschlusskörpers 13. Die Zeitdauer bis zum vollständigen Entlüften des Dampfdruckkochtopfes 20 ist somit durch die Position des Verschlusskörpers 13 bestimmt. Ist somit der Verschlusskörper 13 in der Entlüftungsstellung gemäss Figur 3 weiter unten angeordnet, so werden die Öffnungen 7 teilweise freigegeben und entsprechend erfolgt der Entlüftungsvorgang langsamer. Die in Figur 3 gezeigte Position des Verschlusskörpers 13 kann durch eine Schulter 10 der Bohrung 4, die zusammen mit der Feder 8 eine Anschlagfläche bildet, bestimmt sein.

Die Fläche 18 sowie die Fläche 2 des Ventilgehäuses 3 sind so ausgebildet, dass die Position des Verschlusskörpers 13 sich mit der Drehstellung des Kopfes 9 ändert. In Figur 4 sind mit ausgezogenen Linien und mit gestrichelten Linien 2 unterschiedliche Drehpositionen gezeigt. Die Flächen 18 und/oder 2 sind als Steuerflächen ausgebildet, die bewirken, dass beim Drehen des Kopfes 9 zwischen den beiden in Figur 4 gezeigten Positionen der Verschlusskörper 13 nach oben beziehungsweise nach unten bewegt wird. Beispielsweise ist dazu die Fläche 18 bezüglich der Längsachse 26 geneigt. Der Benutzer des Dampfdruckkochtopfes 20 kann somit selber wählen, wie schnell entlüftet werden soll. Bei einem empfindlichen Kochgut wird er entsprechend langsamer entlüften als bei einem weniger empfindlichen Kochgut. Durch entsprechendes Drehen des Kopfes 9 während dem Entlüften ist es auch möglich, anfangs langsam und nachher schneller zu entlüften. Die Entlüftungsgeschwindigkeit ist visuell an der Drehstellung des Kopfes 9 gut erkennbar. Möglich ist auch eine Skala oder dergleichen.

Die Figur 7 zeigt eine Variante des Sicherheitsventils 1, bei welcher auf das Ventilgehäuse 33 ein Gehäuseaufsatz 39 lösbar aufgesetzt ist. Der Gehäuseaufsatz 39 ist beispielsweise mit federnden Rastzungen 30 am Ventilgehäuse 33 befestigt. Dazu besitzt das Gehäuse 33 eine umlaufende Rastnut 31, in welche die Rastzungen 30 eingreifen. Der vorzugsweise aus Kunststoff oder Metall hergestellte Gehäuseaufsatz 39 besitzt einen Durchgang 34, der korrespondierend zum unrunden Kopf 9 des Druckstiftes 12 ausgebildet ist. Über dem Durchgang 34 befindet sich eine Vertiefung 35, die eine Grundfläche 32 besitzt, auf welche der Kopf 9 zum Entlüften aufzusetzen ist. In Figur 7 ist die Entlüftungsposition des Kopfes 9 mit gestrichelten Linien dargestellt. Die Fläche 32 ist bezüglich der Längsachse 26 geneigt, derart, dass die Position des Ventilkörpers 13 abhängig ist von der Drehstellung des Kopfes 9 in der gestrichelt gezeigten Entlüftungsposition. Die in Figur 7 gezeigte Ausführung mit einem Gehäuseaufsatz 39 hat den Vorteil, dass das Sicherheitsventil 1 ansonsten wie üblich ausgebildet sein kann. Lediglich eine Rastnut 31 oder andere Befestigungsmittel sind hier erforderlich.

## Patentansprüche

1. Sicherheitsventil für einen Dampfdruckkochtopf (20), mit einem in einem Ventilgehäuse (3) axial verschiebbar gelagerten und unter der Wirkung einer Feder (8) stehenden Druckstift (12), der gegen die rückwirkende Kraft der Feder (8) in eine Entlüftungsposition anhebbar ist, wobei in der Entlüftungsposition der Druckstift (12) im Ventilgehäuse (3) einen oder mehrere Durchgänge (7) freigibt, durch die Dampf aus dem Innern (24) des Dampfdruckkochtopfs (20) nach aussen entweichen kann, dadurch gekennzeichnet, dass Mittel (9) vorgesehen sind, mit denen der Druckstift (12) zum Druckausgleich in der Entlüftungsposition gegen die rückwirkende Kraft der Feder (8) arretierbar ist.

2. Sicherheitsventil nach Anspruch 1, dadurch gekennzeichnet, dass der Druckstift (12) in der Entlüftungsposition durch Verdrehen arretierbar ist.

3. Sicherheitsventil nach Anspruch 1 oder 2, dadurch gekennzeichnet, dass der Druckstift (12) an seinem oberen Ende einen unrunden Kopf (9) aufweist, der in einer Drehstellung am Ventilgehäuse (3) oder an einem Gehäuseaufsatz (39) anlegbar ist.

4. Sicherheitsventil nach einem der Ansprüche 1 bis 3, dadurch gekennzeichnet, dass die Mittel (9) zum Arretieren des Druckstiftes (12) so ausgebildet sind, dass die Entlüftungsposition des Druckstiftes (12) verstellbar ist.

5. Sicherheitsventil nach Anspruch 4, dadurch gekennzeichnet, dass die Entlüftungsposition stufenlos verstellbar ist.

6. Sicherheitsventil nach Anspruch 4 oder 5, dadurch gekennzeichnet, dass die Entlüftungsposition mittels einer ansteigenden Steuerfläche (18, 32) verstellbar ist.

7. Sicherheitsventil nach einem der Ansprüche 1 bis 6, dadurch gekennzeichnet, dass das Ventilgehäuse (3) oder ein Gehäuseaufsatz (39) eine Ausnehmung (6, 35) aufweist, in welche das obere Ende (9) des Druckstiftes (12) in seiner unteren Position wenigstens bereichsweise eingreift.

8. Sicherheitsventil nach Anspruch 7, dadurch gekennzeichnet, dass ein Kopf (9) des Druckstiftes (12) ganz oder bereichsweise in die Ausnehmung (6, 35) eingreift.

9. Sicherheitsventil nach Anspruch 8, dadurch gekennzeichnet, dass der Kopf (9) im Querschnitt gesehen korrespondierend zur Ausnehmung (6, 35) ausgebildet ist.

10. Sicherheitsventil nach einem der Ansprüche 1 bis 9, dadurch gekennzeichnet, dass ein Ventilaufsatz (39) vorgesehen ist, der am oberen Ende des Gehäusekörpers (33) auf diesem lösbar befestigt ist und der eine Durchtrittsöffnung (34) für den Druckstift (12) aufweist.
